**Europäisches Patentamt**

(19) **European Patent Office**

**Office européen des brevets**

(11) Veröffentlichungsnummer: **0 014 955**
**B1**

(12) # EUROPÄISCHE PATENTSCHRIFT

(45) Veröffentlichungstag der Patentschrift:
15.09.82

(51) Int. Cl.³: **G 01 T 7/02**, G 01 T 1/204,
G 21 H 5/02

(21) Anmeldenummer: **80100730.3**

(22) Anmeldetag: **13.02.80**

(54) Verfahren zum Vorbereiten von Proben von mit Tritium- beziehungsweise Tritium- und C(14)-Isotopen zusammen markierten Materialien, hauptsächlich Proben von organischen Verbindungen und Materialproben biologischen Ursprunges, zur Flüssigkeitsszintillations-Radioaktivitätsmessung sowie Anordnung zu dessen Durchführung.

(30) Priorität: **14.02.79 HU MA003108**

(43) Veröffentlichungstag der Anmeldung:
**03.09.80 Patentblatt 80/18**

(45) Bekanntmachung des Hinweises auf die Patenterteilung:
**15.09.82 Patentblatt 82/37**

(84) Benannte Vertragsstaaten:
**AT CH DE FR GB NL SE**

(56) Entgegenhaltungen:
**DE-A-2 441 314**
**DE-B-1 927 927**
**FR-A-2 218 026**
**US-A-3 830 628**
**US-A-3 837 807**

**Die Akte enthält technische Angaben, die nach dem Eingang der Anmeldung eingereicht wurden und die nicht in dieser Patentschrift enthalten sind.**

(73) Patentinhaber: **MAGYAR TUDOMANYOS AKADEMIA KÖZP KEMIAI KUTATO INTEZET**, Pusztaszeri ut 59-67 Postfach 17, H-1025 Budapest II (HU)

(72) Erfinder: **Gács, István**, Dipl.-Ing., Ady E. u. 12, Budapest II (HU)
Erfinder: **Vargay, Zoltán**, Dipl.-Chem., Vezér u. 59/b, Budapest XIV (HU)
Erfinder: **Dobis-Farkas, Emilia**, Dipl.-Chem., Borbolya u. 8, Budapest II (HU)
Erfinder: **Dombi, Sándor**, Dipl.-Ing., Zöldmáli u. 90, Budapest II (HU)
Erfinder: **Payer, Károly**, Dipl.-Ing., Somloi u. 5, Budapest XI (HU)
Erfinder: **Ottinger, Jozsef**, Kerepesi ut 140 IX.em.114, H-1144 Budapest (HU)
Erfinder: **Prukács, Gábor**, Erdö u. 133 a, Budakeszi (HU)
Erfinder: **Ötvös, Laszlo**, Prof. Dipl.-Chem., Boroka u. 13, Budapest II (HU)

(74) Vertreter: **Beszédes, Stephan G., Dr.**, Am Heideweg 2 Postfach 1168, D-8060 Dachau (DE)

Verfahren zum Vorbereiten von Proben von mit Tritium- beziehungsweise
Tritium- und $^{14}$C-Isotopen zusammen markierten Materialien, hauptsächlich Proben
von organischen Verbindungen und Materialproben biologischen Ursprunges, zur
Flüssigkeitsszintillations-Radioaktivitätsmessung sowie Anordnung zu dessen Durchführung

Die Erfindung betrifft ein Verfahren zum Vorbereiten von Proben von mit Tritium-($^3$H-) beziehungsweise Tritium- und $^{14}$C-Isotopen zusammen markierten Materialien, hauptsächlich Proben von organischen Verbindungen und Materialien biologischen Ursprungs, zur Flüssigkeitsszintillations-Radioaktivitätsmessung sowie eine Anordnung zu dessen Durchführung.

Gegenwärtig ist die Flüssigkeitsszintillations-Zählung ein weitverbreitetes, nahezu ausschließlich angewandtes Verfahren zur Messung der Radioaktivität von mit weichen $\beta$-strahlenden Isotopen, zum Beispiel mit Tritium oder mit Tritium und dem $^{14}$C-Isotop zusammen markierten organischen Verbindungen und Proben organischen Ursprungs. Zur Erzielung von entsprechenden analytischen Ergebnissen sind die Probenvorbereitungsarbeitsgänge, in deren Verlauf die Probe oder der Isotopengehalt der Probe in eine zur Zählung geeignete Lösung überführt wird, von grundlegender Bedeutung. Gerade deshalb sind die isotopenanalytischen Forschungen auf die Ausarbeitung von allgemein anwendbaren, gut reproduzierbaren, einfachen und eine schnelle und quantitative Isotopenerzeugung gewährleistenden automatischen Probenvorbereitungsverfahren gerichtet. Diese Forschungen sind durch die beim Inlösungbringen der Proben erfahrungsgemäß auftretenden Schwierigkeiten beziehungsweise durch die Notwendigkeit einer Lösung der auf die Probenvorbereitung folgenden Meßprobleme gerechtfertigt. In vom Gesichtspunkt der Energieaufnahme aus vorteilhaften Lösungsmitteln kann nämlich die Mehrzahl der Proben nicht direkt gelöst werden und ein Teil der löslichen Proben ergibt auch farbige Lösungen, welche das emittierte Licht teilweise absorbieren. Auch wenn die Lösung nicht gefärbt ist, wird oft die Menge des emittierten Lichts durch den gelösten Stoff selbst vermindert. Die die Photonenauslösung herabsetzenden Erscheinungen und die Farb- und Konzentrationsextinktion führen zu von Probe zu Probe unterschiedlichen Zählverlusten beziehungsweise zu einer Energiespektrumsverschiebung. Weitere Probleme treten bei der Untersuchung der Energiespektren der betreffenden Isotope [Tritium ($^3$H) und $^{14}$C] und der Zählungsstatistik auf. Im Falle von zweifach markierten Proben wird nämlich wegen der Überlappung der Energiespektren der zwei Isotope ein Teil der Menge des Isotops mit größerer Energie zusammen mit der Menge des Isotops mit geringerer Energie gemessen. Wenn das Verhältnis der Zählgeschwindigkeit von Tritium zu $^{14}$C größer als $^1/_4$ ist, können bei der Berechnung der Menge des Isotops mit geringerer Energie beträchtliche Fehler auftreten.

Es ist allgemein bekannt, daß die Radioisotopen-Markierungstechnik ein wichtiges Verfahren für biologische, biochemische und damit in Verbindung stehende sonstige Untersuchungen ist. Zur Auswertung von auf der Anwendung der Tritium-($^3$H-) und $^{14}$C-Isotope beruhenden Untersuchungen ist sehr oft die Isotopenanalyse einer großen Zahl sich in ihren chemisch-physikalischen Eigenschaften unterscheidenden Proben auszuführen. Außer einer Lösung der durch die Probenlöslichkeit, die Extinktion und die zweifach markierten Substanzen verursachten meßtechnischen Probleme erfordert die Analyse einer großen Zahl von Proben ein schnelles, automatisiertes Probenvorbereitungsverfahren.

Durch Überführung des Wasserstoff- und Kohlenstoffgehaltes der Probe in Wasser beziehungsweise Kohlendioxyd, getrennte Überführung des Tritium aufweisenden Wassers oder anders ausgedrückt Wasserstofftritiumoxyds (HTO) und des das $^{14}$C-Isotop aufweisenden Kohlendioxyds ($^{14}$CO$_2$) in Lösung und Flüssigkeitsszintillations-Radioaktivitätsmessung der so erhaltenen Lösungen können die bereits erwähnten Schwierigkeiten der Probenvorbereitung (wie Farb- und Konzentrationsextinktion und im Falle von zweifach markierten Proben auftretende Korrekturschwierigkeiten) umgangen werden. Im Hinblick darauf, daß das Tritium aufweisende Wasser und das das $^{14}$C-Isotop aufweisende Kohlendioxyd unter anderem als direktes Oxidationsprodukt der markierten Verbindungen und biologischen Proben durch Verbrennung erhalten werden können und anschließend durch eine geeignete Trennung dieser Verbrennungsprodukte und Überführung in Flüssigkeitsszintillationslösungen die Forderung nach der in gleicher chemischer Form erfolgenden Radioaktivitätsmessung erfüllt ist, wurden in erster Linie Probenvorbereitungsverfahren, welche die Probenverbrennung als erste Stufe anwenden, ausgearbeitet.

Bei den Verfahren, bei welchen geschlossene Systeme, zum Beispiel die sogenannte Schöniger-Technik (Verbrennung in geschlossenen Kolben), angewandt werden (R. G. Kelly, E. A. Peets, S. Gordon und D. A. Buyske, Anal. Biochem., 2 [1961], 267; F. Kalberer und J. Rutschmann, Helv. Chim. Acta, 44 [1961], 1956; G. N. Gupta, Anal. Chem., 38 [1966], 1356; L. A. Wegner und Winkelmann, Atompraxis, 16 [1970], 19), ist die Trennung von Kohlendioxyd und Wasser voneinander und von den sonstigen Verbrennungsprodukten nur auf besonderem Wege zu erreichen, weil die Probenverbrennungsvorrichtung zugleich das Sammelsystem für Wasser und Kohlendioxyd ist. Diese übrigens auch außerordentlich zeit- und arbeitsaufwendigen Verfahren haben den weiteren Nachteil, daß sie zur Vorbereitung von zweifach markierten und flüssigen Proben sowie von Probenreihen ungeeignet beziehungsweise in ihrer Anwendbarkeit wegen der Umständlichkeit der Abtrennung und des Zeit-und Arbeitsbedarfes der Teilvorgänge stark begrenzt sind.

Im Falle der Verfahren, bei welchen die Technik der Probenverbrennung im Sauerstoffstrom mit offenem System angewandt wird, sind im allgemeinen die zum Verbrennen der Probe und Sammeln des Wassers und des Kohlendioxyds dienenden Systeme voneinander abtrennbar. Die bekannten Verfahren und die zugehörigen Anordnungen beziehungsweise Vorrichtungen haben aber folgende Charakteristika und Nachteile:

a) Die zu analysierenden Proben sind gesondert, einzeln und manuell in die Anordnung einzubringen. Das Verfahren, bei welchem die Verbrennung im Hochspannungsfunken angewandt wird (J. E. Naokes in »Liquid Scintillation Counting, Recent Developments«, P. E. Stanley und B. A. Scoggings, ed. Seite 125, Academic Press, New York, 1974) und die entsprechende Vorrichtung sind zur Vorbereitung von flüssigen Proben ungeeignet und es muß auf eine sorgfältige Anordnung beziehungsweise Plazierung der Proben geachtet werden. In einem anderen Fall (N. Kaartinen, Packard Bulletin, 18 [1969], Seiten 1 bis 9) muß zu den einzelnen Proben unmittelbar vor der Verbrennung ein Zusatzstoff zugegeben und der Verbrennungsvorgang je nach den chemisch-physikalischen Eigenschaften der Probe geregelt werden. Beim kontakt-katalytischen Verfahren (M. H. Griffitsh und A. Mallison, Anal. Biochem., 22 [1968], 456) kann sich parallel mit der Korrosion des Verbrennungsrohres und der Desaktivierung des Katalysators der Wirkungsgrad der Isotopenrückgewinnung vermindern.

b) Die die Radioaktivitätsmessung störenden Verbrennungsprodukte der in der Probe neben Kohlenstoff und Wasserstoff vorliegenden anderen Bestandteile, zum Beispiel von Chlor, Brom, Jod, Schwefel und Phosphor, werden erst in den Vorrichtungen, bei welchen die kontakt-katalytische Verbrennung oder Nachverbrennung angewandt wird, vom Wasser und Kohlendioxyd abgetrennt (H. Frohofer, Z. Anal. Chem., 271 [1974], 203).

c) Die Abtrennung des radioaktiven Kohlendioxyds und Wassers voneinander beziehungsweise die Abscheidung des Tritium aufweisenden Wassers aus dem Trägergasstrom erfolgt durch Kondensation, Ausfrieren oder Absorption in einem gegebenen Lösungsmittel (M. H. Griffitsh und A. Mallison, Anal. Biochem., 22 [1968], Seite 456; J. I. Peterson und Mitarbeiter, Anal. Biochem., 31 [1969], Seite 189; N. Kaartinen, Packard Bulletin, 18 [1969], Seiten 1 bis 9; J. E. Naokes in »Liquid Scintillation Counting, Recent Developments«, P. E. Stanley und B. A. Scoggings, ed., Seite 125, Academic Press, New York, 1974). Vom analytischen Gesichtspunkt aus ist aber weder die Abscheidung des Tritium aufweisenden Wassers, noch die Trennung des Wassers und Kohlendioxyds quantitativ. Das bedeutet, daß das Tritium aufweisende Wasser und das das $^{14}C$-Isotop aufweisende Kohlendioxyd in den zu ihrer Abscheidung dienenden Systemen sich gegenseitig verunreinigen. Daher gelangt ein Teil des $^{14}C$-Isotops in die zur Zählung des Tritiums dienende Flüssigkeitsszintillationslösung und ein Teil des Tritiums in die zur Zählung des $^{14}C$-Isotops dienende Flüssigkeitsszintillationslösung. Bei der direkten Wasserkondensation oder der Abscheidung mit einem Lösungsmittel muß mit einem dem Wasserdampfpartialdruck und der Trägergasmenge proportionalen Verlust gerechnet werden.

d) Die zur Aufnahme der vorbereiteten Proben beziehungsweise der Flüssigkeitsszintillationslösungen dienenden Küvetten müssen einzeln für jede Probe an die Anordnung angeschlossen und nach der Messung von ihr entfernt werden (J. E. Naokes in »Liquid Scintillation Counting, Recent Developments«, P. E. Stanley und B. A. Scoggings, ed., Seite 125, Academic Press, New York, 1974).

Ferner ist aus der französischen Offenlegungsschrift 2 218 026 ein Verfahren zum Messen des Isotopengehaltes von Tritium- beziehungsweise Tritium- und $^{14}C$-Isotope enthaltenden Substanzen, hauptsächlich organischen Verbindungen und Proben biologischen Ursprungs, in der Gasphase durch Überführen des Wasserstoffgehaltes der Proben in Wasser und deren Kohlenstoffgehaltes in eine gasförmige Substanz, vorzugsweise Kohlendioxyd, durch gleichzeitige Oxydationsvorgänge, Trennen der gebildeten Wasser und Kohlendioxyd, Rücküberführen des Tritiumgehaltes des Wassers in den Gaszustand, getrenntes Einführen des das Tritiumisotop enthaltenden Gases und gegebenenfalls des das $^{14}C$-Isotop enthaltenden Gases in eine Nachweiseinheit und Bestimmung der Radioaktivität dieser Gase, bei welchem der Tritiumgehalt des Wassers an einen zum Zurückhalten oder Adsorbieren des Wassers fähigen und aktiven Wasserstoff enthaltenden Kontaktkatalysator, vorzugsweise Aluminiumoxyd und/oder Aluminiumhydrosilikat, gebunden wird, worauf die Gasmischung, die auch das $^{14}CO_2$ enthält, wenn eine das $^{14}C$-Isotop enthaltende Probe zu analysieren ist, getrennt und, gegebenenfalls nach einer Reinigung, zusammen mit einem Zählgas in eine Nachweiseinheit eingeführt wird und anschließend das an der Katalysatoroberfläche adsorbierte Tritium kontinuierlich durch Austauschumsetzung mit einem geeigneten Gasstrom, vorzugsweise Wasserstoffgasstrom, in die Gasphase überführt und, gegebenenfalls zusammen mit einem Zählgas, vorzugsweise einem gasförmigen Kohlenwasserstoff oder einer Mischung von gasförmigen Kohlenwasserstoffen, als solches oder in Form einer aus diesem Gas durch chemische Reaktion erhaltenen Verbindung in eine Nachweiseinheit eingeführt wird, und eine Vorrichtung zu dessen Durchführung bekannt. Dieses bekannte Verfahren und die zugehörige Vorrichtung sind aber nur für Messungen in der Gasphase, nicht jedoch für Flüssigkeitsszintillations-Radioaktivitätsmessungen geeignet, so daß die letztere nach der genannten Druckschrift auch nicht vorgesehen ist. Auch ist von der Verwendung einer Cyclohexanol enthaltenden Absorptionsvorrichtung keine Rede. Bei der Abhandlung des damaligen Standes der Technik werden auf Seite 3, Zeile 10 bis Seite 4, Zeile 36 der französischen Offenlegungsschrift 2 218 026 die Verfahren mit Flüssigkeitsszintillations-Radioaktivitätsmessung sogar als schlecht arbeitend angegeben, es wird also von ihnen abgeraten. So wird zum Beispiel auf die niedrige Empfindlichkeit der bekannten Verfahren und Vorrichtungen, auf den von den physikalischen und chemischen Eigenschaften der zu messenden Substanzen abhängenden Zählwirkungsgrad, im Zusammenhang mit einigen Systemen auf die Selbstabsorption und für den Fall homogener Lösungen auf Farb- und Konzentrationslöschung, Phosphoreszenz und Fluoreszenz, welche sich aus den physikalischen und chemischen Eigenschaften des Lösungsmittels und der gelösten Substanzen ergeben und nicht vorausberechenbar sind, hingewiesen. Es war bekannt, daß die den Zählwirkungsgrad beeinflussenden Faktoren schwer korrigierbar sind und auch ihre näherungsweise Berechnung kompliziert und mit hohem Aufwand verbunden ist. Mit den früheren Flüssigkeitsszintillations-Zählverfahren war es besonders schwierig, die von den Routineuntersuchungen der chemischen Forschung in der Landwirtschaft und der Pharmazie erzeugten unterschiedlichen biologischen Substanzproben einer Isotopenanalyse zu unterziehen. Bereits die Vorbereitung der Proben war ein langwieriger und arbeitsaufwendiger manueller Vorgang mit zahlreichen Fehlerquellen. Mit der früher bekannten Flüssigkeitsszintillations-Radioaktivitätsmeßtechnik war es auch sehr schwierig, die Isotopenanalyse von Proben, die gemischt beziehungsweise gleichzeitig mit $^{14}$C- und Tritium-Isotopen markiert waren, vorzunehmen. Dazu waren Zählgeräte mit mehreren Kanälen erforderlich und wegen der Energiediskrimination war der Zählwirkungsgrad viel geringer. Gegenüber diesen großen Schwierigkeiten ist in der französischen Offenlegungsschrift 2 218 026 auf Seite 4, Zeile 37 bis Seite 5, Zeile 8 ausdrücklich festgestellt, daß das Bestreben bestand, diese durch Verfahren der Teilchenzählung in der Gasphase zu beseitigen.

Weiterhin sind in der deutschen Offenlegungsschrift 2 441 314 ein Verfahren und eine Vorrichtung zur Verbrennung von biologischen, inerten oder anderen Stoffen, die radioaktive Isotope, insbesondere $^{14}$C und Tritium, enthalten, bei welchem die Proben in einem Verbrennungsgasstrom vollständig verbrannt werden und aus den Verbrennungsgasen die Isotope in zwei verschiedenen Einrichtungen quantitativ absorbiert und dadurch getrennt werden, wobei das beim Verbrennen entstandene Tritium aufweisende Wasser in einem gekühlten Wasserfänger, wie einer tiefgekühlten Rohrschlange, aus dem Gasstrom ausgefroren und auf diese Weise das Tritium zurückgehalten wird, das $^{14}$C-Isotop enthaltende Kohlendioxyd dagegen durch eine organische Base absorbiert wird, wie es insbesondere aus Seite 5, Zeile 5 bis 22 der genannten Druckschrift hervorgeht, beschrieben. Auch in dieser Druckschrift ist kein Hinweis auf eine Cyclohexanol enthaltende Absorptionsvorrichtung zu finden.

Analoges gilt für das aus der US-PS 3 830 628 bekannte Verfahren und die zugehörige Vorrichtung. Auch in diesem Falle erfolgt die Abtrennung des Tritium enthaltenden Wassers durch Kondensation durch Kühlen, wie es insbesondere Spalten 3, Zeilen 28 bis 32 und Spalte 10, Zeilen 45 bis 48 der genannten Druckschrift zu entnehmen ist. Die schlechte Abtrennung des Tritiums beim Verfahren der US-PS 3 830 628 geht aus der Tatsache, daß bei diesem auch noch eine primäre Tritiumaustauschsäule und eine sekundäre Tritiumaustauschsäule erforderlich sind, um das Tritium vollständig abzutrennen, hervor.

Außerdem ist aus der deutschen Auslegeschrift 1 927 927 eine Vorrichtung zum Vorbereiten von Tritium- und/oder $^{14}$C-markierte Verbindungen enthaltenden, verbrennbaren Proben für die Messung von deren Radioaktivität in einem Flüssigkeits-Szintillations-Zählgerät, das einen Probenwechsler für mit Szintillatorlösung beschickte Szintillationsmeßfläschchen aufweist, mit einer durch einen verschließbaren Einlaß mit reinem Sauerstoff füllbaren Verbrennungskammer aus temperaturbeständigem Material, in der ein Halter zur Aufnahme der Proben und eine elektrische Zündeinrichtung angeordnet sind, und mit Einrichtungen zum vollständigen Überführen der Verbrennungsprodukte in eine Absorberlösung und zum Einbringen der dadurch gebildeten Absorptionslösung in die Szintillationsmeßfläschchen bekannt. Vom Trennen des Kohlendioxyds und des Tritium aufweisenden Wassers und getrennte Überführen der die gegebenen Isotope aufweisenden Materialien in Flüssigkeitsszintillationslösungen beziehungsweise das Vorsehen einer entsprechenden Trennvorrichtung ist keine Rede. In diesem Zusammenhang ist zu bemerken, daß zwar nach der deutschen Auslegeschrift 1 927 927 eine Absorption unter Verwendung einer Absorberlösung vorgesehen ist, wobei aber keine spezielle genannt ist, diese aber nicht zur Trennung, sondern nur zur Aufnahme der gesamten Verbrennungsprodukte zur Zuführung zur Flüssigkeitsszintillations-Radioaktivitätsmessung dient.

Schließlich betrifft die US-PS 3 837 807 die Absorption von das $^{14}$C-Isotop enthaltendem Kohlendioxyd in einem primären Alkoxyalkylamin, wobei von Tritium enthaltendem Wasser oder gar seiner Absorption keine Rede ist.

Der Erfindung liegt die Aufgabe zugrunde, unter Behebung der Nachteile des Standes der Technik ein Verfahren zum Vorbereiten von Proben von mit Tritium- beziehungsweise Tritium- und $^{14}$C-Isotopen zusammen markierten Materialien, hauptsächlich Proben von organischen Verbindungen und Materialproben biologischen Ursprungs, zur Flüssigkeitsszintillations-Radioaktivitätsmessung, welches eine genaue, empfindliche und schnelle sowie gegebenenfalls ohne manuellen Eingriff vollständig automatische Vorbereitung von das Tritium ($^3$H-Isotop) oder die Tritium-($^3$H-) und $^{14}$C-Isotope zusammen enthaltenden Substanzproben zur Flüssigkeitsszintillations-Radioaktivitätsmessung ermöglicht sowie eine Vorrichtung zu dessen Durchführung zu schaffen.

Die Erfindung beruht auf der überraschenden Feststellung, daß das sich bei der Verbrennung der Probe bildende Wasser oder das mit der Probe in das System eingebrachte Wasser beziehungsweise dessen Tritiumgehalt durch Verwendung von Cyclohexanol als Absorptionsmittel durch die spontane Kondensation des Wassers sowie die Kombination der Vorgänge zwischen dem im Trägergasstrom zurückbleibenden Tritium aufweisenden Wasser und dem Tritiumabsorptionsmittel Cyclohexanol (Absorption und Isotopenaustausch) aus dem zur Verbrennung der Probe dienenden Sauerstoffstrom bei Zimmertemperatur quantitativ abgeschieden und anschließend ohne Verluste in die Flüssigkeitsszintillations-Küvette überführt werden können.

Ferner beruht die Erfindung auf der Feststellung, daß, im Falle daß Tritium- und $^{14}$C-Isotope zusammen enthaltende Proben zu analysieren sind, das Tritium und das das $^{14}$C-Isotop aufweisende Kohlendioxyd durch Abscheiden des das Tritium aufweisenden Wassers beziehungsweise Tritiums im Cyclohexanolabsorptionsmittel voneinander quantitativ getrennt und gesondert ohne Verluste in die Flüssigkeitsszintillations-Küvette überführt werden können.

Gegenstand der Erfindung ist daher ein Verfahren zum Vorbereiten von Proben von mit Tritium- beziehungsweise Tritium- und $^{14}$C-Isotopen zusammen markierten Materialien, hauptsächlich Proben von organischen Verbindungen und Materialproben biologischen Ursprungs, zur Flüssigkeitsszintillations-Radioaktivitätsmessung durch Verbrennen der Probe, das heißt oxydatives Überführen des Wasserstoffgehaltes der Probe in Wasser und des Kohlenstoffgehaltes derselben in Kohlendioxyd, Trennen des Kohlendioxyds und Tritium aufweisenden Wassers unter Absorption und Überführen der die gegebenen Isotope aufweisenden Materialien getrennt voneinander in Flüssigkeitsszintillationslösungen, welches dadurch gekennzeichnet ist, daß das Trennen des Kohlendioxyds vom Tritium aufweisenden Wasser in der Weise durchgeführt wird, daß das durch das Verbrennen der Probe erhaltene Gasgemisch in eine Cyclohexanol enthaltende Absorptionsvorrichtung, in welcher das Tritium aufweisende Wasser beziehungsweise das Tritium quantitativ gebunden werden, eingeleitet wird und aus ihr das, gegebenenfalls das $^{14}$C-Isotop aufweisende, Kohlendioxyd quantitativ weitergeleitet wird.

Gegenstand der Erfindung ist auch eine Anordnung zur Durchführung des erfindungsgemäßen Verfahrens mit einer Probenhalter- und Zuführvorrichtung, einer mit ihr verbundenen und an eine steuerbare Sauerstoffquelle beziehungsweise -leitung angeschlossenen Verbrennungseinheit und einer mit der letzteren verbundenen Trennvorrichtung und gegebenenfalls einer an eine Flüssigkeitsszintillations-Probenhaltereinheit, vorteilhaft über ein steuerbares Ventil, sperrbar angeschlossenen Kohlendioxydabsorptionsvorrichtung, welche dadurch gekennzeichnet ist, daß die Trennvorrichtung eine Cyclohexanol enthaltende das Tritium aufweisende Wasser beziehungsweise das Tritium bindende Absorptionsvorrichtung ist, die außer mit der Verbrennungseinheit mit einer anderen Flüssigkeitsszintillations-Probenhaltereinheit, vorteilhaft über ein steuerbares Ventil, sowie gegebenenfalls mit der Kohlendioxydabsorptionsvorrichtung, vorteilhaft über ein anderes steuerbares Ventil, sperrbar verbunden ist.

Nach einer vorteilhaften Ausführungsform der erfindungsgemäßen Anordnung ist die Probenhalter- und Zuführvorrichtung mit einem elektrischen Programmgeber verbunden.

Die Bindung des Tritiumgehaltes des in die Cyclohexanol enthaltende Absorptionsvorrichtung eingeleiteten Gasgemisches erfolgt im allgemeinen in der Weise, daß das Tritium aufweisende Wasser vom Cyclohexanol gebunden wird und zwischen dem Tritium aufweisenden Wasser, zum Teil auch unmittelbar aus dem es enthaltenden Gasgemisch heraus, und dem Cyclohexanol ein Isotopenaustausch, durch den der größere Teil des Tritiums des Tritium aufweisenden Wassers an Stelle von Wasserstoff des Cyclohexanols unter Bildung eines Tritium aufweisenden Cyclohexanols tritt, eintritt, so daß der größere Teil des Tritiums als Tritium aufweisendes Cyclohexanol und der geringere Teil als Tritium aufweisendes Wasser vorliegt.

Die wichtigsten Vorteile des erfindungsgemäßen Verfahrens und der erfindungsgemäßen Anordnung sind wie folgt:

A) Durch quantitative Trennung des Tritiums und $^{14}$C-Isotops voneinander beziehungsweise des Tritiums und gegebenenfalls $^{14}$C-Isotops vom zu bestimmenden Gemisch gewährleisten das erfindungsgemäße Verfahren und die erfindungsgemäße Anordnung die genaue und reproduzierbare Bestimmung des Isotopengehaltes von zweifach markierten Proben.

B) Das erfindungsgemäße Verfahren und die erfindungsgemäße Anordnung liefern sowohl bei einfacher als auch bei doppelter Markierung gut reproduzierbare Ergebnisse. Die Genauigkeit und die Reproduzierbarkeit sind praktisch unabhängig von der Versiertheit des Bedienungspersonals.

C) Der Vorgang der Probenvorbereitung kann beginnend mit der Unterbringung der Proben in der Probenhalter- und Zuführvorrichtung automatisch ohne manuellen Eingriff erfolgen.

D) Während des Gebrauchs der erfindungsgemäßen Anordnung und der Anwendung des

5

erfindungsgemäßen Verfahrens verändert sich der Wirkungsgrad der praktisch quantitativen Isotopenrückgewinnung nicht. Daher sind eine häufige Kontrolle der Anordnung mit Standardproben und Korrekturrechnungen nicht notwendig.

E) Die Erinnerungswirkung der erfindungsgemäßen Anordnung ist praktisch zu vernachlässigen, so daß sich eine Dekontaminierung der Anordnung mit inaktiven Proben erübrigt.

F) Infolge des einfachen Aufbaues der erfindungsgemäßen Anordnung ist ihre Störanfälligkeit gering und ihre Wartung einfach durchzuführen, wobei einzelne Bestandteile derselben auch gegeneinander ausgetauscht verwendbar sind. Die gleiche Flüssigkeitsszintillationslösung ist sowohl für die Radioaktivitätsmessung des Tritiums als auch für die des $^{14}$C-Isotops geeignet.

G) Der Zeitbedarf der Probenvorbereitung ist sehr gering, so daß stündlich 30 bis 60 Proben für die Flüssigkeitsszintillations-Radioaktivitätsmessung vorbereitet werden können.

H) Die vorbereiteten Proben gelangen immer in gleicher chemischer Form zur Radioaktivitätsmessung, die nach Entfernung der die Radioaktivitätsmessung störenden Verbrennungsprodukte der neben Kohlenstoff und Wasserstoff in der Probe enthaltenen sonstigen Elemente erfolgt.

I) Der Betriebsaufwand des erfindungsgemäßen Verfahrens und der erfindungsgemäßen Anordnung sind im Vergleich zu anderen Verfahren und Anordnungen niedrig.

Die Erfindung unterscheidet sich von der französischen Offenlegungsschrift 2 218 026 grundlegend darin, daß

a) erfindungsgemäß im Gegensatz zur französischen Offenlegungsschrift 2 218 026 eine Cyclohexanol enthaltende Absorptionsvorrichtung, in welcher das Tritium aufweisende Wasser beziehungsweise das Tritium quantitativ gebunden wird, verwendet wird und

b) es sich erfindungsgemäß um die Flüssigkeitsszintillations-Radioaktivitätsmessung handelt, also erfindungsgemäß das absorbierte Tritium und das $^{14}$C-Isotop in Flüssigkeitsszintillationslösungen überführt werden, während nach der französischen Offenlegungsschrift 2 218 026 diese Isotope in der Gasform in die Nachweiseinheit geleitet werden.

Auch gelten die obigen Vorteile A), B), D), E), F), G), H) und I) für die Erfindung im Vergleich zur genannten Druckschrift.

Im Gegensatz zur deutschen Offenlegungsschrift 2 441 314, gemäß welcher das Tritium aufweisende Wasser durch Kühlen aus dem Gasstrom ausgefroren wird, wird erfindungsgemäß das Tritium ohne Kühlen und Ausfrieren bei Raumtemperatur (durch Isotopenaustausch) von Cyclohexanol gebunden. Erfindungsgemäß handelt es sich also in keiner Weise darum, das Tritium aufweisende Wasser durch Kühlen niederzuschlagen. Dabei kann auch beim erfindungsgemäßen Verfahren ohne Kühlung eine spontane Vorkondensation auftreten, die im Hinblick auf die Messung keine Bedeutung hat, worauf aber das Tritium durch Isotopenaustausch in das Cyclohexanol eintritt.

Gegenüber der US-PS 3 830 628 bringt die Erfindung den überraschenden Vorteil mit sich, daß erfindungsgemäß die nach der genannten Druckschrift erforderlichen zwei Tritiumaustauschsäulen sich erübrigen und dennoch eine vollständige Abtrennung des Tritiums beziehungsweise Trennung desselben vom $^{14}$C-Isotop erreicht wird.

Dadurch, daß sich die Erfindung auf das Trennen des Kohlendioxyds und Tritium aufweisenden Wassers richtet und im Gegensatz dazu die deutsche Auslegeschrift 1 927 927 damit nichts zu tun hat, sondern die Absorberlösung nur zum Auffangen der gesamten Verbrennungsprodukte dient, unterscheidet sich die erstere von der letzteren grundlegend. Dabei ist die Wirkung des Cyclohexanols als wasserbindend und isotopenaustauschend überraschend.

Auf Grund der Tatsache, daß es sich erfindungsgemäß um das Binden des Tritiums zu dessen Abtrennen vom Kohlendioxyd handelt, während davon in der US-PS 3 837 807 keine Rede ist, vielmehr diese nur die Absorption von das $^{14}$C-Isotop enthaltendem Wasser betrifft, handelt es sich in beiden Fällen um etwas grundlegend anderes.

Die Erfindung wird an Hand der folgenden beispielhaften Darlegungen in Verbindung mit den Zeichnungen näher erläutert. Hierbei sind

Fig. 1 das Blockschema einer Ausführungsform der erfindungsgemäßen Anordnung und

Fig. 2 das Blockschema einer spezielleren weiteren Ausführungsform der erfindungsgemäßen Anordnung.

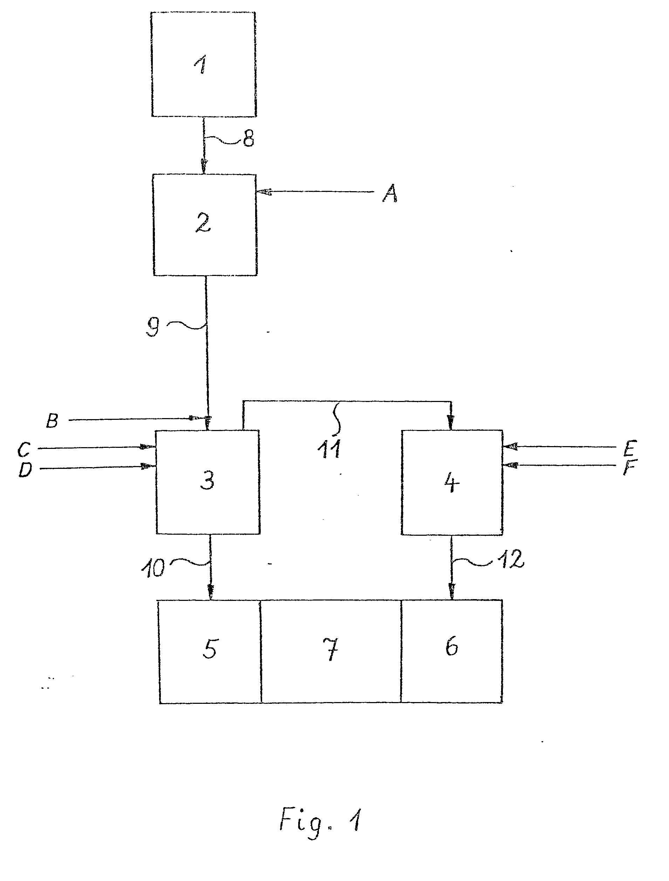

In der Fig. 1 ist eine Probenhalter- und Zuführvorrichtung 1 durch eine Leitung 8 an eine mit einer Sauerstoffleitung A verbundene Verbrennungseinheit 2 angeschlossen. Durch die erstere wird die Probe in die letztere eingeführt. In der Verbrennungseinheit 2, die vorteilhafterweise aus einem Quarzrohr besteht, wird der Wasserstoff- und Kohlenstoffgehalt der Probe mit dem durch die Sauerstoffleitung A eingeführten Sauerstoff in Wasser beziehungsweise Kohlendioxyd überführt. Der Phosphorgehalt wird von vorhergehend der Probe zugesetztem Wolframtrioxyd und der Schwefel- und Halogengehalt von in der Verbrennungseinheit 2 untergebrachter Silberwolle gebunden. An die Verbrennungseinheit 2 ist durch eine Leitung 9 eine Cyclohexanol enthaltende Absorptionsvorrichtung 3, welche mit einer Cyclohexanolleitung C zur Einführung des Cyclohexanols verbunden ist, angeschlossen. Die in der Verbrennungseinheit 2 als Verbrennungsprodukte der mit Tritium beziehungsweise Tritium und dem $^{14}$C-Isotop zusammen markierten Proben entstandenen radioaktives dampfförmiges Wasser und radioaktives Kohlendioxyd werden mit dem Sauerstoffträgergas in diese Cyclohexanol enthaltende Absorptionsvorrichtung 3 überführt, in welcher das Tritium aufweisende Wasser beziehungsweise das Tritium durch Kondensation des ersteren bei Zimmertemperatur beziehungsweise durch ihr Cyclohexanol quantitativ zurückgehalten wird. An die das Cyclohexanol enthaltende Absorptionsvorrichtung 3 ist durch eine Leitung 11 eine weitere Absorptionsvorrichtung, nämlich eine Kohlendioxydabsorptionsvorrichtung 4, welche mit einer Kohlendioxydleitung E zur Einführung des Kohlendioxyds verbunden ist, angeschlossen. Bei zweifacher Markierung wird nämlich das das Kohlendioxyd enthaltende Gas von der das Cyclohexanol enthaltenden Absorptionsvorrichtung 3 durch die Leitung 11 in die Kohlendioxydabsorptionsvorrichtung 4 weitergeleitet, in welcher das Kohlendioxyd durch ein geeignetes Absorptionsmittel, vorzugsweise 1-Amino-3-methoxypropan, ohne Verluste gebunden wird. Die das Cyclohexanol enthaltende Absorptionsvorrichtung 3 ist durch eine Leitung 10 an eine Flüssigkeitsszintillations-Probenhaltereinheit 5 und die Kohlendioxydabsorptionsvorrichtung 6 durch eine Leitung 12 an eine andere Flüssigkeitsszintillations-Probenhaltereinheit 6 angeschlossen, wobei zwischen den beiden Flüssigkeitsszintillations-Probenhaltereinheiten 5, 6 eine Küvettenwechslereinheit 7 zur Beschickung der letzteren mit Küvetten beziehungsweise Probenhaltern und deren Entfernen aus ihnen angeordnet ist. An die die Verbrennungseinheit 2 mit der das Cyclohexanol enthaltenden Absorptionsvorrichtung 3 verbindende Leitung 9 ist eine Leitung B für eine zur Flüssigkeitsszintillations-Zählung geeignete mit Wasser mischbare Flüssigkeit, vorzugsweise Äthylalkohol, angeschlossen. An die Cyclohexanol enthaltende Absorptionsvorrichtung 3 ist auch eine Leitung D für eine Flüssigkeitsszintillationslösung, vorzugsweise eine Lösung auf Toluolbasis, angeschlossen. An die Kohlendioxydabsorptionsvorrichtung 4 ist auch eine Leitung F für eine Flüssigkeitsszintillationslösung, vorzugsweise eine Lösung auf Toluolbasis, angeschlossen. Nach der erfolgten Probenverbrennung in der Verbrennungseinheit 2 wird das Kondenswasser aus der Cyclohexanol enthaltenden Absorptionsvorrichtung 3 mit der zur Flüssigkeitsszintillations-Zählung geeigneten mit Wasser mischbaren Flüssigkeit, vorzugsweise Äthylalkohol, von der betreffenden Leitung B und das Tritiumabsorptionsmittel Cyclohexanol sowie gegebenenfalls das in der Kohlendioxydabsorptionsvorrichtung befindliche Kohlendioxydabsorptionsmittel mit der Flüssigkeitsszintillationslösung, vorzugsweise der Lösung auf Toluolbasis, von der betreffenden Leitung D beziehungsweise den betreffenden Leitungen D und F durch die Leitung 10 beziehungsweise 12 in die beziehungsweise die jeweilige Flüssigkeitsszintillations-Probenhaltereinheit 5 und gegebenenfalls 6 gespült.

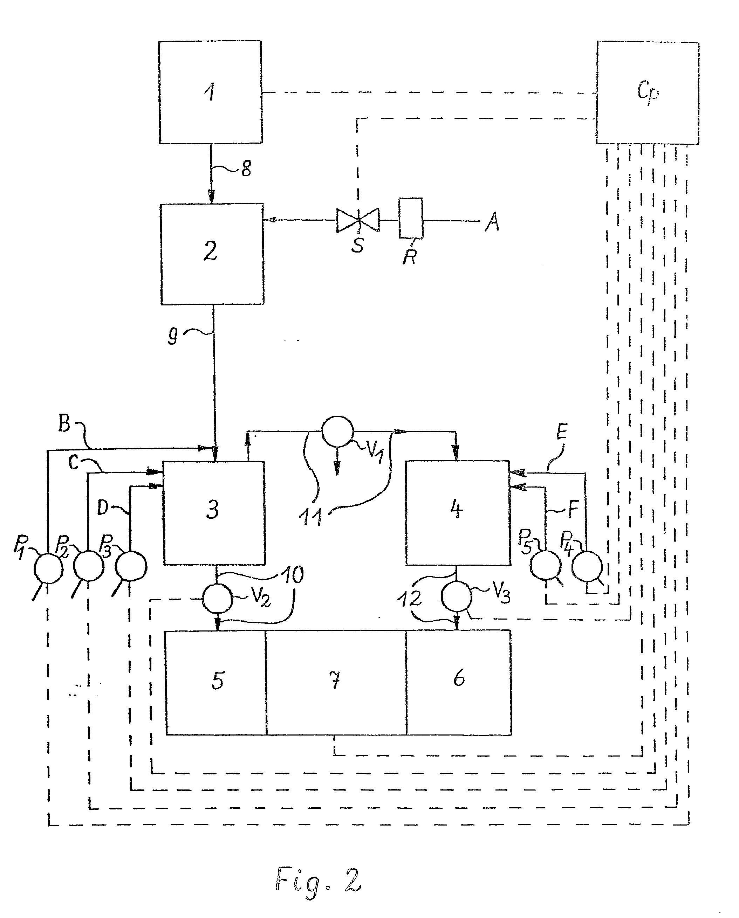

In der in der Fig. 2 dargestellten Anordnung ist die Verbindung durch automatische Ventile, deren dem Vorgang der Probenvorbereitung entsprechender Betrieb während des gegebenen Probenvorbereitungszyklus vom Programmgeber Cp gesteuert wird, hergestellt. In die mit der Verbrennungseinheit 2 verbundene an eine (nicht dargestellte) Sauerstoffflasche beziehungsweise sonstige Sauerstoffquelle angeschlossene Sauerstoffleitung A sind ein Strömungs- und Druckregler R sowie ein elektromagnetisches Ventil S eingebaut. In die Leitung B für die zur Flüssigkeitsszintillations-Zählung geeignete mit Wasser mischbare Flüssigkeit, vorzugsweise Äthylalkohol, ist eine Pumpe $P_1$ zur Zuführung dieser Flüssigkeit, in die Cyclohexanolleitung C ist eine Pumpe $P_2$ zur Zuführung des Cyclohexanols und in die Leitung D für die Flüssigkeitsszintillationslösung, vorzugsweise die Lösung auf Toluolbasis, ist eine Pumpe $P_3$ zur Zuführung dieser Lösung eingebaut. Diese Pumpen $P_1$, $P_2$, $P_3$ dienen dem Einführen dieser Flüssigkeiten beziehungsweise Lösungen in die Cyclohexanol enthaltende Absorptionsvorrichtung 3. In die Kohlendioxydleitung E ist eine Pumpe $P_4$ zur Zuführung des Kohlendioxyds und in die Leitung F für die Flüssigkeitsszintillationslösung, vorzugsweise die Lösung auf Toluolbasis, ist eine Pumpe $P_5$ zur Einführung dieser Lösung eingebaut. Diese Pumpen $P_4$, $P_5$ dienen dem Einführen dieser Medien in die Kohlendioxydabsorptionsvorrichtung 4. In die die Cyclohexanol enthaltende Absorptionsvorrichtung 3 und die Kohlendioxydabsorptionsvorrichtung 4 verbindende Leitung 11 ist ein Wechselventil $V_1$ eingebaut. Bei der Vorbereitung von mit Tritium und dem $^{14}$C-Isotop zusammen markierten Proben wird die Cyclohexanol enthaltende Absorptionsvorrichtung 3 durch das Wechselventil $V_1$ über die betreffende Leitung 11 mit der Kohlendioxydabsorptionsvorrichtung 4 und bei der Vorbereitung von nur einfach mit Tritium markierten Proben ebenfalls durch das Wechselventil $V_1$ ebenfalls über die betreffende Leitung 11 mit der umgebenden Atmosphäre verbunden. In die die Cyclohexanol enthaltende Absorptionsvorrichtung 3 mit der zugehörigen Flüssigkeitsszintillations-Probenhaltereinheit 5 verbindende Leitung 10 ist ein Einwegventil $V_2$ und in die die Kohlendioxydabsorptionsvorrichtung 4 mit der zugehörigen Flüssigkeitsszintillations-Probenhaltereinheit 6 verbindende Leitung 12 ist ein anderes Einwegventil $V_3$ eingebaut. Beim Öffnen des Einwegventils $V_2$ gelangen das Tritium aufweisende Wasser und das Tritium aufweisende Cyclohexanol aus der Cyclohexanol enthaltenden Absorptionsvorrichtung 3 in die zugehörige Flüssigkeitsszintillations-Probenhaltereinheit 5 und beim Öffnen des Einwegventils $V_3$ das Kohlendioxydabsorptionsmittel aus der Kohlendioxydabsorptionsvorrichtung 4 in die zugehörige Flüssigkeitsszintillations-Probenhaltereinheit 6.

Die Probenhalter- und Zuführvorrichtung 1, das elektromagnetische Ventil S, die Pumpen $P_1$, $P_2$, $P_3$, $P_4$ und $P_5$, die Einwegventile $V_2$ und $V_3$ und die Küvettenwechslereinheit 7 sind in an sich bekannter Weise mit je einem Ausgang des Programmgebers Cp verbunden.

Die Erfindung wird an Hand des folgenden Beispiels näher erläutert.

### Beispiel

Die Vorbereitung einer jeden Probe bestand aus vier Arbeitsphasen. Vor dem Einschalten der Anordnung wurden die in Aluminium- oder Bleikapseln eingewogenen Tritium und das $^{14}$C-Isotop enthaltenden Proben in die Probenhalter- und Zuführvorrichtung 1 eingelegt und das Wechselventil $V_1$ sowie das Automatikprogramm dem beziehungsweise den zu messenden Isotopen entsprechend eingestellt.

In der ersten Phasen wurden durch den Programmgeber Cp die Einwegventile $V_2$, $V_3$ geschlossen, das elektromagnetische Ventil S geöffnet und die die Proben enthaltenden Küvetten mittels der Küvettenwechslereinheit 7 weitergeschoben (auf diese Weise gelangten neue Probenhalter zu den Sammelstellen der Proben). Im Falle von mit Tritium und dem $^{14}$C-Isotop zusammen markierten Proben wurden daraufhin bestimmte Mengen Cyclohexanol und Kohlendioxydabsorptionsmittel 1-Amino-3-methoxypropan durch über den Programmgeber Cp gesteuertes Inbetriebsetzen der betreffenden Pumpen $P_2$, $P_4$ durch die Cyclohexanolleitung C in die Cyclohexanol enthaltende Absorptionsvorrichtung 3 beziehungsweise durch die Kohlendioxydleitung E in die Kohlendioxydabsorptionsvorrichtung 4 eingeführt. Bei der Vorbehandlung von nur einfach mit Tritium markierten Proben wurde nur mit der Pumpe $P_2$ Cyclohexanol zugeführt.

In der zweiten Phase blieben das elektromagnetische Ventil S geöffnet und die Einwegventile $V_2$ beziehungsweise $V_3$ geschlossen. Die Probenhalter- und Zuführvorrichtung 1 wurde durch den Programmgeber Cp in Funktion gesetzt und die erste Probe gelangte durch die betreffende Leitung 8 in die auf 1000°C aufgeheizte Verbrennungseinheit 2, in welcher sie im in das System durch die Sauerstoffleitung A eingeführten Sauerstoff schlagartig verbrannte. Der Phosphorgehalt der Probe wurde durch beim Einwägen zur Probe zugesetztes Wolframtrioxyd und der Schwefel- und Halogengehalt der Probe wurden durch in der Verbrennungseinheit 2 untergebrachte Silberwolle gebunden.

Die quantitative Oxydation der Verbrennungsprodukte zu Wasser und Kohlendioxyd wurde durch einen ebenfalls in der Verbrennungseinheit 2 befindlichen Katalysator, vorzugsweise durch Kupferoxyd, gewährleistet. Im Falle von mit Tritium und dem $^{14}$C-Isotop zusammen markierten Proben wurden der erhaltene Wasserdampf und das erhaltene Kohlendioxyd mit dem die Verbrennungseinheit 2 durchströmenden Sauerstoff durch die betreffende Leitung 9 in die Cyclohexanol enthaltende Absorptionsvorrichtung 3 gefördert, in welcher das Tritium aufweisende Wasser beziehungsweise Tritium quantitativ zurückgehalten wurden, während das Kohlendioxyd vom Sauerstoffstrom durch entsprechende Schaltung des in diese eingebauten Wechselventils $V_1$ in die mit einer gegebenen Menge 1-Amino-3-methoxypropan gefüllte Kohlendioxydabsorptionsvorrichtung 4 weiterbefördert wurde. Im Falle von nur einfach mit Tritium markierten Proben wurde der das Kohlendioxyd befördernde Sauerstoff nach dem Austritt aus der Cyclohexanol enthaltenden Absorptionsvorrichtung 3 durch die betreffende Leitung 11 über das in diese eingebaute Wechselventil $V_1$ durch entsprechende Schaltung desselben ins Freie geleitet.

In der dritten Phase wurde das elektromagnetische Ventil S geschlossen. Das in die die Cyclohexanol enthaltende Absorptionsvorrichtung 3 mit der zugehörigen Flüssigkeitsszintillations-Probenhaltereinheit 5 verbindende Leitung 10 eingebaute Einwegventil $V_2$ und gegebenenfalls das in die die Kohlendioxydabsorptionsvorrichtung 4 mit der zugehörigen Flüssigkeitsszintillations-Probenhaltereinheit 6 verbindende Leitung 12 eingebaute Einwegventil $V_3$ wurden geöffnet, wodurch das in der Cyclohexanol enthaltenden Absorptionsvorrichtung 3 befindliche Tritiumabsorptionsmittel Cyclohexanol und gegebenenfalls das in der Kohlendioxydabsorptionsvorrichtung 4 befindliche Kohlendioxydabsorptionsmittel 1-Amino-3-methoxypropan dem gegebenen Automatikprogramm entsprechend in die Flüssigkeitsszintillations-Probenhaltereinheit(en) 5 und gegebenenfalls 6 gelangte(n).

In der vierten Phase begannen (dem gegebenen Automatikprogramm entsprechend) im Falle von mit Tritium und dem $^{14}$C-Isotop zusammen markierten Proben die in die Leitung B für die zur Flüssigkeitsszintillations Zählung geeignete mit Wasser mischbare Flüssigkeit eingebaute Pumpe $P_1$ und die in die Leitungen D beziehungsweise F für die Flüssigkeitsszintillationslösungen eingebauten Pumpen $P_3$ beziehungsweise $P_5$ zu arbeiten. Dabei wurden das in der Cyclohexanol enthaltenden Absorptionsvorrichtung 3 kondensierte Tritium aufweisende Wasser mit Äthylalkohol und das in dieser Absorptionsvorrichtung 3 zurückgebliebene Tritiumabsorptionsmittel Cyclohexanol und das in der Kohlendioxydabsorptionsvorrichtung 4 zurückgebliebene Kohlendioxydabsorptionsmittel 1-Amino-3-methoxypropan mit der Flüssigkeitsszintillationslösung in die Flüssigkeitsszintillations-Probenhaltereinheiten 5, 6 gespült. Im Falle von einfach mit Tritium markierten Proben arbeiteten nur die Pumpen $P_1$ und $P_3$.

Die vier Phasen des Probenvorbereitungsarbeitsganges konnten so lange automatisch wiederholt werden, bis die in die Probenhalter- und Zuführvorrichtung 1 untergebrachten Proben aufgearbeitet waren.

8

**0 014 955**

Die Ergebnisse von Meßreihen zum Nachweis der Reproduzierbarkeit des Verfahrens und der zuverlässigen Arbeitsweise der Anordnung sind für einfach mit Tritium markierte Proben in der folgenden Tabelle 1 und für zweifach mit Tritium und dem $^{14}$C-Isotop markierte Proben in der folgenden Tabelle 2 zusammengestellt.

Tabelle 1

Analytische Ergebnisse (einfach markierte Proben)

| Probe | Gewicht in mg | Gemessene spezifische Radioaktivetät in dpm/mg |
|---|---|---|
| Salicylsäure-$^3$H (spezifische Radioaktivität auf Grund direkter Messungen) | 11,258 | 30 180 |
| | 15,283 | 30 439 |
| | 16,776 | 30 258 |
| | 19,289 | 30 389 |
| | 19,426 | 30 452 |
| | 21,376 | 29 916 |
| | 21,847 | 30 094 |
| | 21,930 | 30 399 |
| | 23,331 | 30 194 |
| | 23,371 | 30 065 |
| | 50,855 | 30 011 |
| | 73,047 | 29 940 |
| | | Durchschnitt X = 30 195 |
| Lunge*) | 12,751 | 1 484 |
| | 25,263 | 1 424 |
| | 75,877 | 1 416 |
| Gehirn*) | 28,479 | 554 |
| | 43,879 | 556 |
| | 136,066 | 554 |
| Milz*) | 19,073 | 2 439 |
| | 17,793 | 2 438 |
| | 12,910 | 2 424 |
| Niere*) | 33,869 | 5 411 |
| | 37,026 | 5 443 |
| | 54,652 | 5 440 |

**0 014 955**

Fortsetzung

| Probe | Gewicht in mg | Gemessene spezifische Radioaktivetät in dpm/mg |
|---|---|---|
| Leber*) | 62,845 | 7 006 |
| | 59,763 | 7 075 |
| | 62,825 | 7 076 |
| Benzoesäure-$^{14}$C (spezifische Radioaktivität auf Grund direkter Messungen: 6 362 $\pm$ 25 dpm/mg) | 9,085 | 6 339 |
| | 15,874 | 6 414 |
| | 14,770 | 6 290 |
| | 10,632 | 6 298 |
| | 12,639 | 6 408 |
| | 12,605 | 6 350 |
| | 17,256 | 6 343 |
| | 13,876 | 6 368 |
| | 13,115 | 6 377 |
| | 18,398 | 6 411 |
| | 14,232 | 6 404 |
| | 14,258 | 6 365 |
| | Durchschnitt X = | 6 364 |

*) mit 3,4-Diacetyl-1,2,5,6-dianhydrodulcit-$^3$H, Dosis: 50 $\mu$Ci/200 g Ratte.

10

Tabelle 2

Analytische Ergebnisse (zweifach markierte Proben)

| Probe | Gewicht in mg | | Gemessene spezifische Radioaktivität | |
|---|---|---|---|---|
| | $^3$H | $^{14}$C | $^3$H in dpm/mg | $^{14}$C in dpm/mg |
| Salicylsäure-$^3$H + Benzoe-säure-$^{14}$C (zusammen) | 13,869 + 13,279 = 27,148 | | 30 164 | 6 375 |
| | 17,929 + 11,833 = 29,762 | | 30 062 | 6 388 |
| | 18,204 + 11,101 = 29,305 | | 30 236 | 6 361 |
| | 18,439 + 16,088 = 34,527 | | 30 275 | 6 306 |
| | 19,159 + 6,445 = 25,604 | | 30 026 | 6 300 |
| | 19,572 + 12,152 = 31,724 | | 30 110 | 6 377 |
| | 19,918 + 11,233 = 31,151 | | 30 129 | 6 382 |
| | 15,404 + 10,900 = 26,304 | | 29 842 | 6 380 |
| | 20,943 + 8,233 = 29,216 | | 30 206 | 6 346 |
| | 21,780 + 10,205 = 31,985 | | 29 992 | 6 401 |
| | 21,852 + 12,691 = 34,543 | | 30 210 | 6 392 |
| | 27,700 + 9,965 = 37,665 | | 30 172 | 6 339 |
| | | | Durchschnitt X = 30 119 | Durchschnitt X = 6 362 |
| Leber*) | 59,029 | | 26 712 | 4 738 |
| | 60,542 | | 26 840 | 4 681 |
| | 65,117 | | 26 347 | 4 654 |
| Lunge*) | 33,587 | | 26 350 | 1 964 |
| | 34,630 | | 26 062 | 1 936 |
| | 34,786 | | 25 932 | 1 905 |
| Niere*) | 54,371 | | 38 487 | 2 091 |
| | 62,811 | | 37 936 | 2 110 |
| | 92,350 | | 38 376 | 2 158 |
| Gehirn*) | 51,520 | | 3 693 Hintergrund | |
| | 63,112 | | 3 641 Hintergrund | |
| | 88,836 | | 3 678 Hintergrund | |

*) mit 3,4-($\beta$-Phenylpropionyl)-1,2,5,6-dianhydrodulcit-$^3$H, $^{14}$C,
Dosis: $^{14}$C = 72 µCi/200 g Ratte,
      $^3$H = 545 µCi/200 g Ratte.

Aus den obigen Tabellen 1 und 2 geht auch der überraschende, nicht vorauszusehende Vorteil, daß die spezifische Radioaktivität auch von biologischen Proben mit sehr guter Reproduzierbarkeit zu messen ist, hervor.

## Patentansprüche

1. Verfahren zum Vorbereiten von Proben von mit Tritium- beziehungsweise Tritium- und $^{14}C$-Isotopen zusammen markierten Materialien, hauptsächlich Proben von organischen Verbindungen und Materialproben biologischen Ursprungs, zur Flüssigkeitsszintillations-Radioaktivitätsmessung durch Verbrennen der Probe, das heißt oxydatives Überführen des Wasserstoffgehaltes der Probe in Wasser und des Kohlenstoffgehaltes derselben in Kohlendioxid, Trennen des Kohlendioxides und Tritium aufweisenden Wassers unter Absorption und Überführen der die gegebenen Isotope aufweisenden Materialien getrennt voneinander in Flüssigkeitsszintillationslösungen, dadurch gekennzeichnet, daß man das Trennen des Kohlendioxids vom Tritium aufweisenden Wasser in der Weise durchgeführt, daß man das durch das Verbrennen der Probe erhaltene Gasgemisch in eine Cyclohexanol enthaltende Absorptionsvorrichtung, in welcher man das Tritium aufweisende Wasser beziehungsweise das Tritium quantitativ bindet, einleitet und aus ihr das, gegebenenfalls das $^{14}C$-Isotop aufweisende, Kohlendioxid quantitativ weiterleitet.

2. Anordnung zur Durchführung des Verfahrens nach Anspruch 1 mit einer Probenhalter- und Zuführvorrichtung (1), einer mit ihr verbundenen und an eine steuerbare Sauerstoffquelle beziehungsweise -leitung (A) angeschlossenen Verbrennungseinheit (2) und einer mit der letzteren verbundenen Trennvorrichtung (3) und gegebenenfalls einer an eine Flüssigkeitsszintillations-Probenhaltereinheit (6), vorteilhaft über ein steuerbares Ventil ($V_3$), sperrbar angeschlossenen Kohlendioxydabsorptionsvorrichtung (4), dadurch gekennzeichnet, daß die Trennvorrichtung eine Cyclohexanol enthaltende das Tritium aufweisende Wasser beziehungsweise das Tritium bindende Absorptionsvorrichtung (3) ist, die außer mit der Verbrennungseinheit (2) mit einer anderen Flüssigkeitsszintillations-Probenhaltereinheit (5), vorteilhaft über ein steuerbares Ventil ($V_2$), sowie gegebenenfalls mit der Kohlendioxydabsorptionsvorrichtung (4), vorteilhaft über ein anderes steuerbares Ventil ($V_1$), sperrbar verbunden ist.

3. Anordnung nach Anspruch 2, dadurch gekennzeichnet, daß die Probenhalter- und Zuführvorrichtung (1) mit einem elektrischen Programmgeber (Cp) verbunden ist.

## Claims

1. A process for preparing samples of materials marked with tritium or tritium and $^{14}C$ isotopes together, respectively, mainly samples of organic compounds and material samples of biological origin, for the liquid scintillation radioactivity measurement by burning the sample, i. e. oxydatively converting the hydrogen contents of the sample into water and of the carbon contents of it into carbon dioxide, separating the carbon dioxide and the water containing tritium with absorption and transferring the materials containing the given isotopes separated from each other into liquid scintillation solutions, characterized in that one carries out the separation of the carbon dioxide from the water containing tritium in such a way that one feeds the gaseous mixture obtained by the burning of the sample into an absorption device containing cyclohexanol in which one quantitatively binds the water containing tritium or the tritium, respectively, and from it one quantitatively forwards the carbon dioxide, optionally containing the $^{14}C$ isotope.

2. A set-up for carrying out the process according to claim 1 having a sample supporting and feeding device (1), a burning unit (2) connected with the former and a controllable oxygen source or line (A), respectively, and (having) a separating device (3) connected with the latter unit and optionally (having) a carbon dioxide absorption device (4) closably connected with a liquid scintillation sample supporting unit (6), advantageously via a controllable valve ($V_3$), characterized in that the separating device is an absorption device (3) containing cyclohexanol and binding the water containing tritium or the tritium, respectively, which is closably connected besides with the burning unit (2) with another liquid scintillation sample supporting unit (5), advantageously via a controllable valve ($V_2$), as well as optionally with the carbon dioxide absorption device (4), advantageously via another controllable valve ($V_1$).

3. A set-up according to claim 2, characterized in that the sample supporting and feeding device (1) is connected with an electrical program sender (Cp).

## Revendications

1. Procédé pour la préparation d'échantillons de matières marquées par du tritium ou par du tritium et l'isotope $^{14}C$ ensemble, principalement des échantillons de composés organiques et de matières

**0 014 955**

d'origine biologique, pour la mesure de la radioactivité avec un scintillateur liquide par combustion de l'échantillon, c'est-à-dire par transformation oxydative de la teneur en hydrogène de l'échantillon en eau, et de la teneur en carbone de l'échantillon en gaz carbonique, par séparation du gaz carbonique et de l'eau contenant du tritium avec absorption et par le transfert des matières contenant les isotopes en question, séparément dans des solutions de scintillateurs liquides, caractérisé en ce que l'on effectue la séparation de gaz carbonique de l'eau contenant du tritium en introduisant le mélange gazeux obtenu par la combustion de l'échantillon dans un dispositif d'absorption contenant du cyclohexanol, dans lequel on fixe quantitativement l'eau contenant le tritium ou le tritium, et en conduisant le gaz carbonique contenant le cas échéant l'isotope $^{14}C$ quantitativement vers une destination ultérieure.

2. Dispositif pour la mise en œuvre du procédé selon la revendication 1 comprenant un dispositif de support et d'acheminement de l'échantillon (1), une unité de combustion reliée au dispositif précédent et à une source d'oxygène ou à une amenée d'oxygène réglable (A), et un dispositif de séparation (3) relié à l'unité précédente et éventuellement un dispositif pour l'absorption de gaz carbonique (4) relié de façon à pouvoir être fermé de préférence par l'intermédiaire d'un clapet réglable ($V_3$), à une unité de support d'échantillon pour comptage par scintillateur liquide (6), caractérisé en ce que le dispositif de séparation est un dispositif d'absorption (3) contenant du cyclohexanol susceptible de lier l'eau contenant le tritium ou le tritium, ce dispositif étant relié non seulement à l'unité de combustion (2) mais aussi par une liaison qui peut être fermée, à une autre unité de support d'échantillon pour comptage par scintillateur liquide (5), de préférence par l'intermédiaire d'un clapet réglable ($V_2$), et aussi éventuellement à un dispositif d'absorption de gaz carbonique (4), avantageusement par l'intermédiaire d'un autre clapet réglable ($V_1$).

3. Dispositif selon la revendication 2, caractérisé en ce que le dispositif de support et d'acheminement de l'échantillon (1) est relié à un programmateur électrique (Cp).

13

Fig. 1

Fig. 2